(19)

Europäisches
Patentamt
European
Patent Office
Office européen
des brevets

(11) **EP 3 261 017 A1**

(12) **EUROPEAN PATENT APPLICATION**

(43) Date of publication:
 **27.12.2017 Bulletin 2017/52**

(51) Int Cl.:
 **G06K 9/00** (2006.01)

(21) Application number: **16175330.6**

(22) Date of filing: **20.06.2016**

(84) Designated Contracting States:
 **AL AT BE BG CH CY CZ DE DK EE ES FI FR GB
 GR HR HU IE IS IT LI LT LU LV MC MK MT NL NO
 PL PT RO RS SE SI SK SM TR**
 Designated Extension States:
 **BA ME**
 Designated Validation States:
 **MA MD**

(71) Applicant: **Delphi Technologies, Inc.
 Troy, MI 48007 (US)**

(72) Inventors:
 • **RAJABIZADEH,, Farzin Ghorban
  42103 Wuppertal (DE)**

• **SU, Yu
  42119 Wuppertal (DE)**
• **MARIN TUR, Javier
  42289 Wuppertal (DE)**
• **COLOMBO, Alessandro
  40235 Düsseldorf (DE)**

(74) Representative: **Aptiv
 Delphi France SAS
 Aptiv Patent Department
 22, avenue des Nations
 95972 Roissy CDG (FR)**

(54) **IMAGE PROCESSING SYSTEM TO DETECT OBJECTS OF INTEREST**

(57) A method of detecting objects of interest in a vehicle image processing system comprising: a) capturing an image on a camera; b) providing a plurality of potential candidate windows by running a detection window at spatially different locations along said image, and repeating this at different image scaling relative to the detection window size; c) for each potential candidate window applying a candidate selection process adapted to select one or more candidates from said potential candidate windows; d) forwarding the candidates determined form step c) to a convolutional neural network (CNN) process; e) processing the candidates to identify objects of interest; characterized wherein the candidate input into the convolutional neural network (CNN) process have been resized by step b).

**FIG. 3**

**Description**

FIELD OF THE INVENTION

This disclosure relates to image processing methods and in particular to vehicle image processing where objects are identified from camera images, such as pedestrians, by image processing and a candidate selection process.

BACKGROUND OF THE INVENTION

Automatic self-driving vehicles are being developed which include sophisticated image processing means adapted to process camera images to elicit information regarding the surrounding environment. In particular it is necessary to identify objects in the environment such as pedestrians.

Pedestrian detection is a canonical case of object detection with a significant relevance in advanced driver assistance systems (ADAS). Due to the diversity of the appearance of pedestrians including clothing, pose, occlusion, as well as background clutter, pedestrian detection is considered as one of the most challenging tasks of image understanding. The current application relates to solving problems in pedestrian detection, but it can be also applied to other object detection problems such as traffic sign recognition (TSR), vehicle detection, animal detection and similar.

One of the fastest and most popular approaches in general object detection, specifically for pedestrian detection, uses a technique which extracts aggregated channel features (ACF) in a very efficient manner and then learns from training data a constant soft cascade for fast detection.

This methodology has been extensively studied and significantly improved by either applying filters over the channel features or extending them with new feature types.

In recent years, convolutional neural networks (CNN) have brought breakthroughs in many computer imaging tasks. Embedding CNN in system processing has been considered a standard strategy. For example, in object detection, the common practice is to generate candidate windows through an efficient approach and then use a CNN for finer classification. The candidate windows can be either category independent (e.g. for general object detection) or category specific (e.g. for pedestrian detection). In case of the latter, a detector (e. g. ACF) is always used to generate a significant reduced number of high quality proposals.

Then a CNN process evaluates each proposal by resizing the original window without reusing the features extracted by the candidate generator. Although the CNN is able to learn good features, its high computational cost (including image resizing and feature extraction from pixels) often blocks its usage for real-time applications. It is an object of the invention to overcome these drawbacks.

STATEMENT OF THE INVENTION

In one aspect of the invention is provided a method of detecting objects of interest in a vehicle image processing system comprising:

a) capturing an image on a camera;
b) providing a plurality of potential candidate windows by running a detection window at spatially different locations along said image, and repeating this at different image scaling relative to the detection window size;
c) for each potential candidate window applying a candidate selection process adapted to select one or more candidates from said potential candidate windows;
d) forwarding the candidates determined form step c) to a convolutional neural network (CNN) process;
e) processing the candidates to identify objects of interest;

characterized wherein the candidate input into the convolutional neural network (CNN) process have been resized by step b).

Said candidate selection process may comprise a cascade.

After step d) the process preferably does not include any further processing of the original image from step a).

Preferably in step e) the candidates are not resized.

The method may include the additional step after step a) of :

converting said image into one or more feature planes (channelised images) and step b) comprises providing a plurality of potential candidate windows by running a detection window at spatially different locations along said one or more of said channelized (feature plane) images, and repeating this at different channel image scaling relative to the detection window size.

Step b) may comprise for said image from step a) or for one or more channelised images (feature planes), converting said image or channelised image(s) into a set (pyramid) of scaled images, and for each of these applying a fixed size detection window at spatially different locations, to provide potential candidate windows.

The convolutional neural network process may not include a regularization layer and includes a dropout layer.

The convolutional neural network process preferably does not include a subsampling layer.

The convolutional neural network process may not include the last two non-linearity layers and include sigmoid layers which enclose the fully connected layer.

The said object of interest may be a pedestrian.

BRIEF DESCRIPTION OF DRAWINGS

Figure 1 illustrates the image processing steps according to a prior art system;
Figure 2 illustrates the sliding detection window of fixed size is used on the image pyramid to detect a candidate
Figure 3 illustrates the image processing steps according to an example of the invention.
Figure 4 compares prior art systems and one example of the invention

Definitions

The following terms used will now be described and defined:

ACF Methodology and channels:

ACF stands for Aggregated Channel Features. In order to increase the classification performance a common practice relies on first computing richer features over the original images. A channel is a registered map of a given input image, where the output pixels are computed from corresponding patches of input pixels. For instance, in a color image each color channel can serve as a channel, e.g. red, green and blue (RGB) channels. Other channels can be computed using linear or non-linear transformation of the given input image. A typical ACF detector uses instead of the raw RGB image (3 channels) 10 channels:

3 channels: luv color space
7 channels: 6 channels Histogram of oriented gradients (HOG) + 1 channel Magnitude.

HOG

The histogram of oriented gradients (HOG) is a feature descriptor used in computer vision and image processing for the purpose of object detection. The technique counts occurrences of gradient orientation in localized portions of an image.

What makes the ACF detector unique is that it does not use Haar features (differences between integral subparts computed in a rectangular area) to build weak classifiers but instead the channels are divided into 4x4 blocks and pixels in each block are summed (aggregated). This means features are single pixel lookups in the aggregated channels.

Cascade

A cascade is linear sequence of one or more or several (e.g. weak) "classifiers". Classifiers are for example tests applied on a potential candidate (window) i. e. a particular image (which is usually a processed scaled sub image) to see if it has e.g. a characteristic of an object of interest i.e. a pedestrian. Weak classifiers are often decision stumps or trees for binary classification. The cascade may consist of several stages. For the problem of pedestrian detection, each stage, can be considered a binary classification function (linear combination of weak classifiers) that is trained to reject a significant fraction of the non-pedestrians, while allowing almost all the pedestrian to pass to the next stage.

Soft cascade

The soft cascade architecture allows for monotonic accumulation of information.

It trains a one stage cascade (monolithic) and is able to reject negative candidates (no pedestrians) after each weak classifier (instead of after each stage). This is done by calculating a rejection trace (every weak classifier gets a threshold).

Constant soft cascade

The constant variant of the soft cascade uses instead of a rejection trace one constant rejection threshold as soon as the confidence of a candidate falls below this threshold it will rejected. This allows for quickly calibrating the detector for a target detection rate, false positive rate or speed.

**Prior Art**

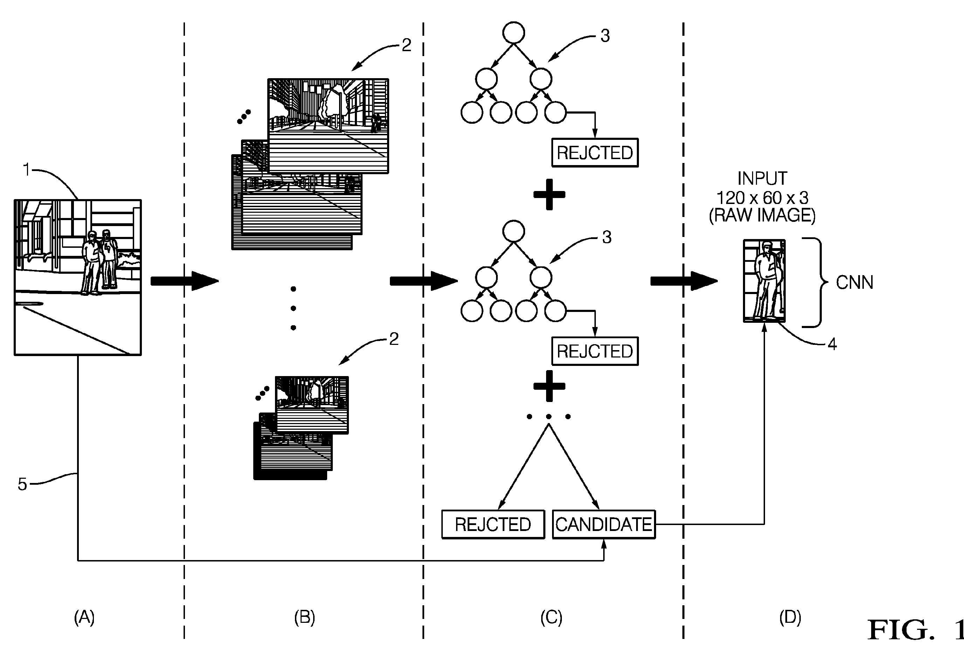

Figure 1 illustrates the image processing steps according of a prior art system. In step (a) an input image 1 is taken by a camera.

In step (b) a pyramid 2 or set of feature planes/scales is provided. There may be e.g. 27 scales per channel in an example. There are two parts to this process:

Firstly the image is channelised, meanings converting the image to a series of feature planes hereinafter referred to as channelised images. See above for the definition of channels
Secondly for each channel, a set or "pyramid" of images are provided, where this set of the channelised images are provided with different sizes (this could be regarded as different magnifications). This is because in common techniques, the detection window may be of a fixed size, are used to spatially encapsulate the object of interest e.g. pedestrian. Thus a set of one or more channelised images of different sizes is determined for one or more original channelised image (i.e. channel).

In step c) a detection window is then run along each channelised image in the pyramid (i.e. each image produced by the processing in step b)) to provide a potential candidate windows, and on each of these potential candidate windows a candidate selection process is implemented e.g. by cascading. Reference numeral 3 represents the cascading process.

So in other words, regarding image pyramid/scales; the later processing step (in ACF) of performing cascade (generating candidates) from potential candidate windows in common methodology can only be applied to the content of a so called (fixed) detection window, i.e. a patch of the image (of a channel) with a constant size. Hence, in order to encapsulate objects such as pedestrians in an (e.g. channelised) image, the detection window is moved spatially (i.e. pixel wise) aiming at localizing the object/pedestrian in any location at different image scales (by scaling the original image).

Thus, to recap, a set of differently scaled images (similar to magnification levels) for each of the (channelised images), is computed - this is referred to as an image pyramid. A fixed size detection window is then shifted at different locations in each of the scaled (channelised) images (with respect to one or more channel sets), which can be regarded as "potential candidate windows", and a candidate selection process is applied at each instant. In figure 1 step b) the output is one or more sets of images in respect of each channel, having different sizing.

It should be noted that alternatively, different detection window sizes can be used on the original (i.e. non-resized) channelised image of each channel. So for each detection window size, the detection window is run along the original channelised images to identify potential candidate windows, and at each instant, the cascade is applied (i.e. for multiple locations of the detection window, for each detection window size).

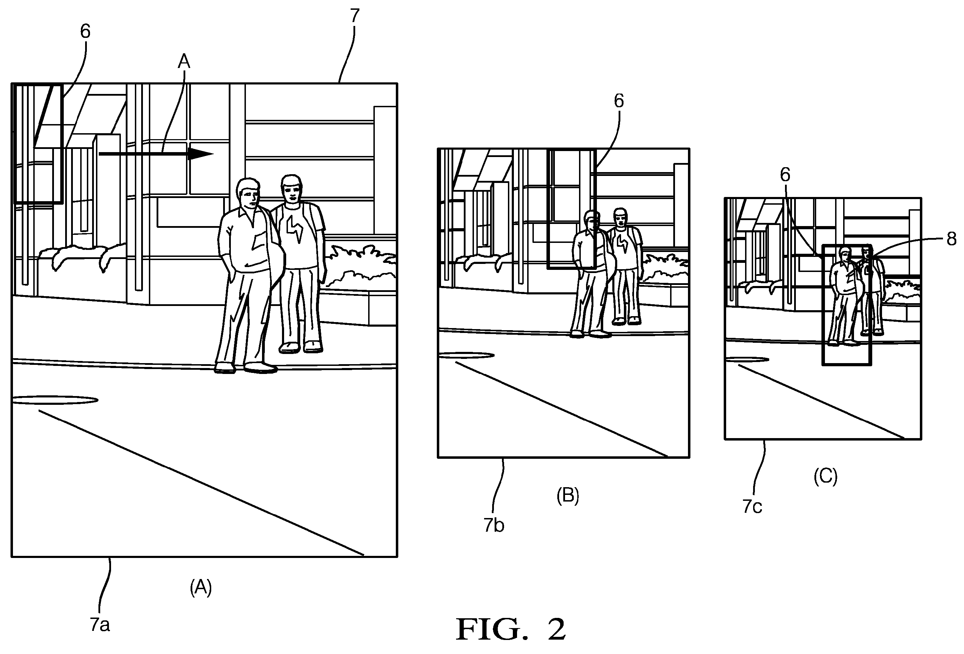

Figure 2 illustrates the sliding detection window of fixed size is used on the image pyramid to detect a candidate. This shows the detection window 6 which is moved, shifted in a sequential fashion (e.g. see arrow A), for each of the scaled (and channelised) images 7 from step b).

In the example particular, an image pyramid with three scales (7a, 7b, 7c) is created to detect the pedestrian 2. The detection window is run along successive portions of each scale (image), the candidate selection process (e.g. cascade) implemented at each stage. As shown in figure 2c a candidate is selected for the scale image 7c at the location of the detection window as shown.

So in essence in step b) a plurality of differently scaled images is effectively provided. This may be done for one or more channels.

Referring back to figure 1, in step c) this shows how candidates (candidate windows) are then selected by the cascade method from potential candidate windows. To recap and repeat, this is performed by running the detection window along each "pyramid" image output from step b) (i.e. for each scaled image for each channel) in step wise fashion to cover the whole image.

At each detection window location (for each potential candidate window), cascading is performed whereby the content of the detection window (representing a possible object of interest i.e. candidate) goes through the cascade to identify actual candidates. This is performed by processes well known in the art. If the confidence of the candidate falls below the threshold of the cascade, it will be rejected, otherwise it would be accepted and passed to the next CNN stage.

The confidence of a candidate may be calculated by summing up the confidences given by each weak classifier included in the cascade. So in summary in step c) candidate for objects such as pedestrian, are processed. This may be performed by cascading. The output of step c) may be a set of one or more candidates manifested as images comprising specific portions of the images of step b) or step a) so candidate windows of different sizes.

In step d) once one or more candidates have been selected" for each candidate, newly determined windows 4 from the raw image of step a) containing the candidate are (and have to be resized either as a prerequisite or part of the CNN process. The CNN process then determines object of interest by refinement processes as known in the art. The CNN thus is used to recalculate (overwrite) the original confidences of the candidates that passed the cascade. CNN is a known techniques for this application. The reference numeral 5 represents that portion of the original image (determined from cascading) which is input to the CNN process.

CNN / convolutional layer:

A CNN architecture is formed by a stack of distinct layers where an image is given to the first layer and the probability / confidence of its class (pedestrian, non-pedestrian) is given as an output. The convolutional layer is the core building block of a CNN. The layer's parameters consist of a set of learnable filters, which extend through the full depth of the input image. During training the network learns filters that activate when they see some specific type of features at some spatial position of the input image.

DESCRIPTION OF THE INVENTION

In a general aspect of the invention, the initial steps are similar to the procedure (e.g. steps a) b) and c) above; ie an ACF procedure. However rather than input an e.g. resized candidate window from the raw image to the CNN process, the input to the CNN classification process are processed images (e.g. via ACF) e.g. from one or more of the steps a) b) and c) instead of raw image pixels, i.e. instead of portion of the original image. In order to do this the CNN process (layers) are amended appropriately. Thus in this fashion there is no need to repeat any re-sizing and/or channelization in the CNN process.

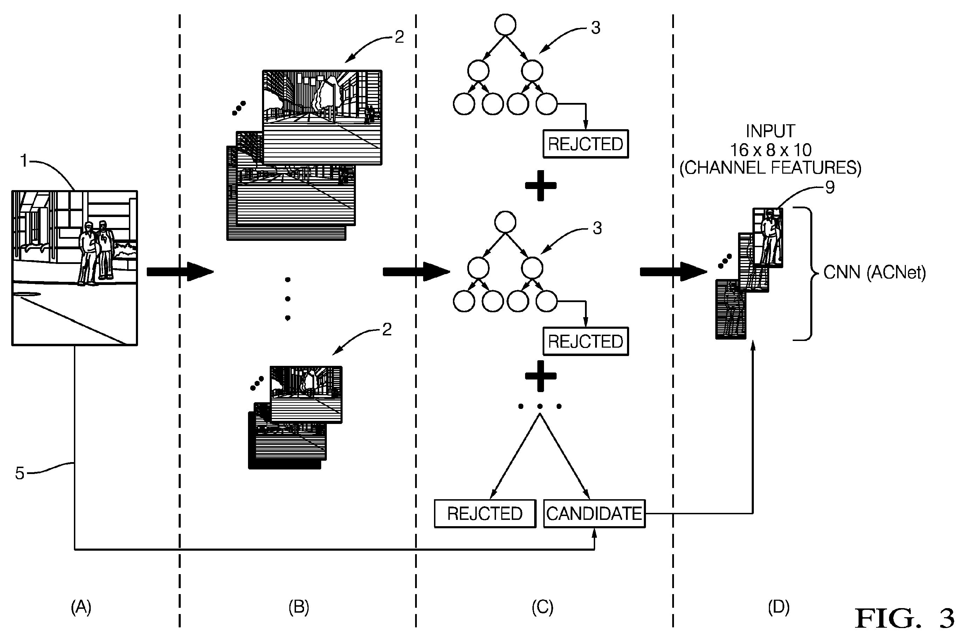

Figure 3 shows process steps of one example of the invention. The steps are identical to that of figure 1 except that the input to step d) i.e. the convolutional neural network process are the selected candidates from step c) as before, but the input to the CNN are the processed ACF candidates i.e. the input is in the form of the candidates 9 which have been channelised/resized in steps a) b) and c). So for example the input to the CNN process will be the candidate selected and in the form of the processed image e.g. as shown in Figure 2c within the detection window

So, in other words, the input to the CNN according to one aspect are candidates (selected from each potential candidate window) which have already been channelized (i.e. have channel features), and which have been already effectively resized, by virtue of running a fixed detection window along a set (for each channel) of images of different sizes (pyramid), or as mentioned running different sized detection windows along the channelised image.

Thus the input to the CNN process means the images (candidates) do not have to be resized and/or channelised. So according to one general aspect, the original image is not used again to determine or derive any input to the CNN process. It should be noted that an advantage is that the image input to the CNN do not have to be resized. Furthermore, the method (process) does not include any further processing of the original image (channelisation/resizing).

It should be noted that in some instances there may be no channelization. In this instance scaled images are determined from the original image, and the detection window run along each scaled images and at each instant the cascade (candidate selection process) performed - or as mentioned the detection window may be run along the original image, and repeated for different detection window sizes. Again at each instant the cascade process is applied.

As resizing/channelisation to produce suitable candidates (i.e. via ACF) is already computed in detection stage b) c), this saves processing. By doing this, the first convolutional layer of CNN which is the most costly step is avoided. The total number of multiplications is reduced to about 1/30: from approximately 90 million for networks using an input of 128x64x3 to about 3 million using examples with an input of 16x8x10.

Furthermore, as CNN takes the input from ACF scale pyramid, the resizing operation is also avoided.

## Architecture

In order to combine the CNN with the methodology (ACF) to provide methods according to examples of the invention, network architecture can be adapted.

In the prior art, input to the CNN process may comprise RGB images. In one examples of the invention, ACF data (e.g. 10 channels) are n input to the CNN.

First, the subsampling layers of the CNN may be removed so that the network can still have a sufficient depth.Subsampling is a form of non-linear down-sampling. There are several non-linear functions to implement Pooling among whose Max-Pooling is the most common one. It partitions the input image into a set of non-overlapping rectangles and, for each such sub-region, outputs the maximum. Further explanation of this can be found

https://en.wikipedia.
org/wiki/Convolutional_neural_network

The input to a CNN may have a size of 16x8x10, applying a subsampling would shrink this size to 8x4x10. This would not allow to have a sufficient number of convolutional layers (sufficient depth), which is needed for CNN to be able to learn more complex patterns.

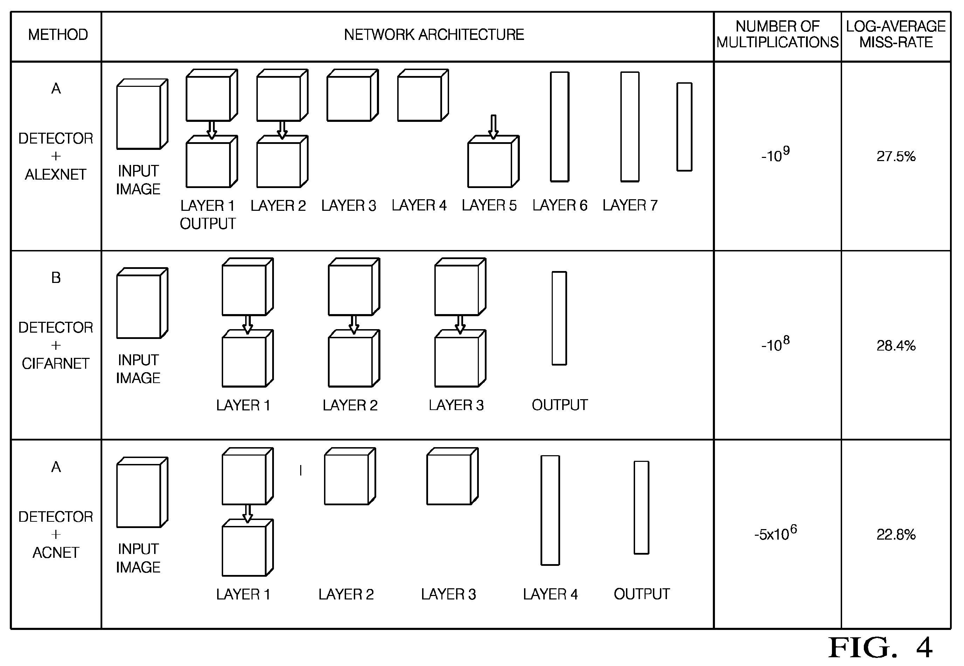

Second, the regularization layers may be replaced (i.e. contrast normalization layers and batch normalization layers) by a computationally much cheaper dropout layer. There are a variety of methods that can be used to do regularization. This is used for preventing the network from "over-fitting" (i.e. contrast normalization layers and batch normalization layers). Contrast normalization will now be explained. With reference to figure 4b, a contrast normalization is shown. In examples avoid such a layer is avoided for efficiency purposes.

A dropout (layer) is a kind of regularization layer that prevents the network from overfitting. At each training stage, individual nodes are randomly "dropped out" of the net (with probability 1-$p$) or kept with probability $p$, so that a reduced network is left. Probability $p$ is an input parameter.

Finally, the last two non-linearity layers are replaced by sigmoid layers which enclose the fully connected layer and change the objective function of the CNN from softmax and cross-entropy to square error.

To explain with regard to non-linearity layers:_without a nonlinear activation function, the neural network is calculating linear combinations of values or linear combinations of lines.

One of the most common non-linear activation functions is the ReLU layer $f(x)$= max($0,x$) (Rectified Linear Units). Compared to other functions the usage of Re-LU is preferable, because it results in the neural network training several times faster,[without making a significant difference to generalisation accuracy.

Sigmoid function is also a form of non-linear function $f(x)=(1 + e^{-x})^{-1}$.

$$y_{ijk} = \frac{e^{x_{ijk}}}{\sum_{t=1}^{D} e^{x_{ijt}}}$$

where, ijk is the height, width and the depth (number of channels), D is the total number of channels. This is the softmax operator. It is applied across feature channels and in a convolutional manner. Softmax can be seen as the combination of an activation function (exponential) and a normalization function.
log loss / cross-entropy

$$l(x, c) = -\log x_c$$

$x_c$ is the predicted probability of class c.
The square error is defined as the following:

$$E = \frac{1}{2}\sum_{i=1}^{n}(t_i - O_i)^2$$

where E is the squared error, n is the number of the input samples, $t_i$ is the label of i-th sample and $O_i$ is its corresponding network output. With regard to the definition of "label"_ every class gets an integer number as a label. For example, pedestrians get the label 2 (10 in binary representation) and non-pedestrians get label of 1 (01). We have two neurons at the end of the network. Labels 1 (01 in binary representation) means, that the first neuron shall return 1 and second neuron return 0. The opposite happens for label 2. The output, Oi, is the output for the given input i. Oi is a real number between 0 and 1. Based on that the error E is calculated and used for training the network (backpropagation).

Figure 4 compares the architecture and processing speed of prior art systems and one according to one example of the invention. The figure shows architecture (generally for the CNN process) and such like for: a) a prior art system combining detector plus AlexNet; b) a prior art system comprising detector with CifarNet; and c) an example of the invention comprising detector plus ACNet. The figures show the various layers required. The last two columns respectively show the typical number of multiplications required for processing and the log average miss rate respectively.

**Claims**

1. A method of detecting objects of interest in a vehicle image processing system comprising:

   a) capturing an image (1) on a camera;
   b) providing a plurality of potential candidate windows by running a detection window (6) at spatially different locations along said image, and repeating this at different image scaling relative to the detection window size;
   c) for each potential candidate window applying a candidate selection process adapted to select one or more candidates (9) from said potential candidate windows;
   d) forwarding the candidates determined form step c) to a convolutional neural network (CNN) process;
   e) processing the candidates (9) to identify objects of interest;

   characterized wherein the candidate input (9) into the convolutional neural network (CNN) process have been resized by step b).

2. A method as claimed in claim 1 wherein said candidate selection process comprises a cascade (3).

3. A method as claimed in claim 1 or 2 wherein after step d) the process does not include any further processing of the original image (1) from step a).

4. A method as claimed in any preceding claim wherein in step e) the candidates (4) are not resized.

5. A method as claimed in claims 1 to 4 including the additional step after step a) of:

   converting said image into one or more feature planes (2) (channelised images) and step b) comprises providing a plurality of potential candidate windows by running a detection window (6) at spatially different locations along said one or more of said channelized (feature plane) images (2), and repeating this at different channel image scaling relative to the detection window size.

6. A method as claimed in claims 1 to 5 where step b) comprises for said image from step a) or for one or more channelised images (feature planes), converting said image or channelised image(s) into a set (pyramid) of scaled images (2), and for each of these applying a fixed size detection window (7) at spatially different locations, to provide potential candidate windows.

7. A method as claimed in any preceding claim wherein the convolutional neural network process does not include a regularization layer and includes a dropout layer.

8. A method as claimed in any preceding claim wherein the convolutional neural network process does not include a subsampling layer.

9. A method as claimed in any preceding claim wherein the convolutional neural network process does not include the last two non-linearity layers and includes sigmoid layers which enclose the fully connected layer.

10. A method as claimed in claims 1 to 9 wherein said object of interest is a pedestrian (8) .

FIG. 1

(A)　(B)　(C)　(D)

INPUT
120 x 60 x 3
(RAW IMAGE)

CNN

REJCTED

CANDIDATE

FIG. 2

FIG. 3

| METHOD | NETWORK ARCHITECTURE | | NUMBER OF MULTIPLICATIONS | LOG-AVERAGE MISS-RATE |
|---|---|---|---|---|
| A<br><br>DETECTOR<br>+<br>ALEXNET | INPUT IMAGE | LAYER 1 OUTPUT   LAYER 2   LAYER 3   LAYER 4   LAYER 5   LAYER 6   LAYER 7 | $\sim 10^9$ | 27.5% |
| B<br><br>DETECTOR<br>+<br>CIFARNET | INPUT IMAGE | LAYER 1   LAYER 2   LAYER 3   OUTPUT | $\sim 10^8$ | 28.4% |
| A<br><br>DETECTOR<br>+<br>ACNET | INPUT IMAGE | LAYER 1   LAYER 2   LAYER 3   LAYER 4   OUTPUT | $\sim 5 \times 10^6$ | 22.8% |

**FIG. 4**

EP 3 261 017 A1

Europäisches
Patentamt
European
Patent Office
Office européen
des brevets

# EUROPEAN SEARCH REPORT

Application Number

EP 16 17 5330

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SZARVAS M ET AL: "Pedestrian detection with convolutional neural networks", INTELLIGENT VEHICLES SYMPOSIUM, 2005. PROCEEDINGS. IEEE LAS VEGAS, NV, USA JUNE 6-8, 2005, PISCATAWAY, NJ, USA,IEEE, PISCATAWAY, NJ, USA, 6 June 2005 (2005-06-06), pages 224-229, XP010834126, DOI: 10.1109/IVS.2005.1505106 ISBN: 978-0-7803-8961-8 * Section II. System descriptions * | 1-4,10 | INV. G06K9/00 |
| X | RIBEIRO DAVID ET AL: "Improving the performance of pedestrian detectors using convolutional learning", PATTERN RECOGNITION, ELSEVIER, GB, vol. 61, 27 May 2016 (2016-05-27), pages 641-649, XP029761039, ISSN: 0031-3203, DOI: 10.1016/J.PATCOG.2016.05.027 * abstract; figures 1,3 * * paragraph [01.2] * | 1-6,10 | |
| A | Xiaogang Chen ET AL: "Pedestrian Detection with Deep Convolutional Neural Network" In: "Network and Parallel Computing", 1 November 2014 (2014-11-01), Springer International Publishing, Cham 032548, XP055322299, ISSN: 0302-9743 ISBN: 978-3-642-34690-3 vol. 9008, pages 354-365, DOI: 10.1007/978-3-319-16628-5_26, * the whole document * | 1-10 | TECHNICAL FIELDS SEARCHED (IPC) G06K |

-/--

The present search report has been drawn up for all claims

| Place of search | Date of completion of the search | Examiner |
|---|---|---|
| The Hague | 25 November 2016 | Isa, Sabine |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

**EUROPEAN SEARCH REPORT**

Application Number

EP 16 17 5330

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | VERMA ANKIT ET AL: "Pedestrian Detection via Mixture of CNN Experts and Thresholded Aggregated Channel Features", 2015 IEEE INTERNATIONAL CONFERENCE ON COMPUTER VISION WORKSHOP (ICCVW), IEEE, 7 December 2015 (2015-12-07), pages 555-563, XP032865008, DOI: 10.1109/ICCVW.2015.78 [retrieved on 2016-02-11] * the whole document * ----- | 1-10 | |
| | | | **TECHNICAL FIELDS SEARCHED (IPC)** |

The present search report has been drawn up for all claims

| Place of search | Date of completion of the search | Examiner |
|---|---|---|
| The Hague | 25 November 2016 | Isa, Sabine |

EPO FORM 1503 03.82 (P04C01)